# EUROPÄISCHE PATENTSCHRIFT

(11) **EP 3 651 928 B1**
(45) Veröffentlichungstag und Bekanntmachung des Hinweises auf die Patenterteilung: **19.10.2022**
(21) Anmeldenummer: 18737234.7
(22) Anmeldetag: 02.07.2018
(51) Int. Cl.: B23K 1/08, B23K 1/20, B23K 3/06, B23K 31/12

(54) **LÖTANLAGEN MIT ÜBERWACHUNGSVORRICHTUNG UND VERFAHREN ZUR ÜBERWACHUNG**
SOLDERING SYSTEMS WITH MONITORING DEVICE AND METHODS FOR MONITORING
SYSTEMES DE BRASAGE AVEC DISPOSITIF DE SURVEILLANCE ET PROCÉDÉ DE SURVEILLANCE

(30) Priorität: 11.07.2017 DE 102017115534
(43) Veröffentlichungstag der Anmeldung: 20.05.2020
(73) Patentinhaber: Ersa GmbH, 97877 Wertheim (DE)
(72) Erfinder: SCHAEFER, Michael, 97900 Kuelsheim (DE)
(74) Vertreter: DREISS Patentanwälte PartG mbB
(86) Internationale Anmeldenummer: PCT/EP2018/067751
(87) Internationale Veröffentlichungsnummer: WO 2019/011687

(56) Entgegenhaltungen:
- WO-A2-2014/049340
- DE-A1-102004 063 488
- DE-U1-202006 009 139
- JP-A- H01 205 593
- JP-A- H07 131 143
- JP-A- H10 193 092

## Beschreibung

Die Erfindung betrifft eine Lötanlage zum selektiven Wellenlöten mit wenigstens einer Fluxerdüse und einer Vorrichtung zur Überwachung eines Zustands eines Sprühstrahls der Fluxerdüse. Die Erfindung betrifft ferner eine Lötanlage mit wenigstens einem Löttiegel mit wenigstens einer Lötdüse und einer Vorrichtung zur Überwachung eines Zustands einer stehenden Welle der Lötdüse. Die Erfindung betrifft auch ein Verfahren zur Überwachung eines Zustands eines Sprühstrahls einer Fluxerdüse und/oder einer stehenden Welle.

In Lötanlagen zum selektiven Wellenlöten, wird in einem Löttiegel flüssiges Lot aus einem Lotreservoir mit Hilfe einer Lotpumpe aus dem Lotreservoir durch eine Lötdüse des Löttiegels gefördert, so dass das flüssige Lot durch die an der Oberseite des Löttiegels angeordnete Lötdüse als stehende Welle austritt.

In Lötanlagen wird ferner Flussmittel vor dem Löten mit Hilfe sogenannter Fluxerdüsen auf die zu bearbeitenden Werkstücke aufgebracht, um eine Benetzung der Werkstücke durch das Lot zu verbessern. Dabei tritt ein Sprühstrahl des Flussmittels aus der Fluxerdüse aus und wird auf die Werkstücke geleitet.

Dabei ist es in Lötanlagen zum selektiven Wellenlöten bekannt, sowohl die Löttiegel und die daran angeordneten Lötdüsen, als auch die Fluxerdüsen mit einer Vielzahl von Achsantrieben in einem Arbeitsraum verfahrbar anzuordnen, so dass die Lötdüsen und die Fluxerdüsen relativ zu einer zu bearbeitenden Leiterplatte verfahren werden können.

Beim Einsatz von Lötdüsen und Fluxerdüsen können Verschmutzungen oder ähnliches dazu führen, dass ein Sprühstrahl oder eine stehende Welle nicht mehr die gewünschte Form aufweist oder nicht mehr an die gewünschte Position geleitet werden, bspw. aufgrund von Verschmutzungen der Lötdüsen oder Fluxerdüsen.

Aus dem Stand der Technik ist dabei beispielsweise die Überwachung eines Sprühstrahls einer Fluxerdüse mit einem Durchmesser von weniger als 5 mm bekannt, wobei die Fluxerdüse in eine Prüfposition verfahren wird. Im Bereich der Prüfposition ist dabei eine Lasereinrichtung angeordnet, die einen Laserstrahl aussendet, welcher bei korrekt positionierter Fluxerdüse vom Sprühstrahl der Fluxerdüse unterbrochen wird, so dass diese Unterbrechung detektiert werden kann, wobei damit auf eine ordnungsgemäße Position des Sprühstrahls rückgeschlossen werden kann.

Diese Art der Sprühstrahlüberwachung kann allerdings nur bei sehr dünnen Sprühstrahls verwendet werden, da Sprühstrahls, welche eine größere Fläche, bspw. mit einem Durchmesser von 25 bis 30 mm benetzen, nicht überwacht werden können. Derartig breite Sprühstrahls verlassen die Fluxerdüse fächerförmig, so dass mittels eines Lasers nicht auf die Position des Sprühstrahls rückgeschlossen werden kann, sondern lediglich darauf, ob überhaupt ein Sprühstrahl vorhanden ist.

Bei Lötdüsen gibt es derzeit nur die Möglichkeit der optischen Inspektion der Lötdüsen. Eine automatisierte Überwachung der Lötdüsen ist bislang nicht bekannt.

Aus der WO/2007/106982A1 ist eine Methode bekannt geworden, bei der Sprühparameter von insbesondere KraftstoffEinspritzdüsen mittels einer computerbasierten optischen Mustererkennung erkannt werden. Dort wird mittels eines Planarlasers eine optische Ebene (planar laser sheet) generiert, durch welche der Sprühstrahl hindurch tritt.

Aus der JP H07-131 143 A ist eine Wellenlötanlage bekannt, bei der eine Kamera zur Bestimmung der Höhe der Lötwelle Verwendung findet.

Aus der DE 199 00 599 B4 ist eine Wellenlötanlage und ein zugehöriges Verfahren bekannt, dass eine Krümmungsdetektiervorrichtung umfasst, mit dem ein Krümmungswert des Werkstücks detektiert werden kann.

Aus der DE 10 2004 063 488 A1 ist eine Lötanlage mit einer Prüffläche, einer Kamera und einer Wellenlöteinrichtung bekannt.

Aus der WO 2014/049340 A2 ist eine Anlage zum selektiven Wellenlöten mit einer Kamera und mit einer Kalibrierscheibe bekannt, wobei auf der Kalibrierscheibe durch das Lot sich verfärbende Sticker aufgebracht sind und wobei die Kamera anhand der Verfärbung die Position der Lötdüse erfasst.

Der Erfindung liegt die Aufgabe zugrunde, eine Vorrichtung der eingangs genannten Art derart weiterzubilden, dass eine einfache und zuverlässige Möglichkeit der Überwachung eines Sprühstrahls und/oder einer stehenden Welle geschaffen wird, welche unabhängig vom Durchmesser des Sprühstrahls und/oder der stehenden Welle ist.

Diese Aufgabe wird durch eine Vorrichtung mit den Merkmalen des Anspruchs 1 und des Anspruchs 2 gelöst. Eine derartige Vorrichtung ist eine Vorrichtung für eine Lötanlage zum selektiven Wellenlöten und weist eine Prüffläche auf, die eine Oberseite und eine Unterseite aufweist und derart ausgebildet ist, dass eine Form und/oder Position des Sprühstrahls und/oder eine Form und/oder Position der stehenden Welle auf der Oberseite der Prüffläche dadurch abbildbar ist, dass der Sprühstrahl und/oder die stehende Welle mit der Unterseite der Prüffläche in Kontakt gebracht wird. Die Vorrichtung weist ferner eine Kamera, insbesondere eine Digitalkamera auf, die zur Detektion der auf der Oberseite der Prüffläche abgebildeten Form und/oder Position des Sprühstrahls und/oder der auf der Prüffläche abgebildeten Form und/oder Position der stehenden Welle ausgebildet ist. Dabei ist es denkbar, dass die von der Kamera detektierte Form und/oder Position des Sprühstrahls bzw. der stehenden Welle mittels Bildverarbeitung in einer Steuereinrichtung, bspw. in einer Steuereinrichtung einer Lötanlage zum selektiven Wellenlöten, weiterverarbeitet wird und an einen Bediener der Lötanlage eine Information über den Zustand des Sprühstrahl bzw. der stehenden Welle ausgegeben wird.

Dabei ist die Kamera oberhalb der Oberseite der Prüffläche angeordnet. Besonders bevorzugt ist es dabei, wenn die Kamera in einem definierten Abstand zur Prüffläche angeordnet werden ist.

Vorteilhafterweise ist die Vorrichtung zur Überwachung eines Sprühstrahls einer flächigen Fluxerdüse und/oder zur Überwachung einer stehenden Welle einer flächigen Lötdüse ausgebildet.

Weiterhin ist es vorteilhaft, wenn die Prüffläche eben ausgebildet ist. Dabei ist es denkbar, dass die Prüffläche in einer Ebene angeordnet ist, die orthogonal zur Richtung des Sprühstrahls und/oder der stehenden Welle bzw. zu einer Mittelachse einer Fluxerdüse und/oder einer Lötdüse angeordnet ist.

Gemäß Anspruch 1 ist vorgesehen, dass die Prüffläche eine aufgespannte Papierbahn ist. Somit kann bspw. eine Verschmutzung oder Verstopfung einer Fluxerdüse detektiert werden, indem der Sprühstrahl auf der Papierbahn abgebildet wird. Aus einer auf der Prüffläche abgebildeten Form und/oder Position des Sprühstrahls kann vorteilhafterweise auf eine Verstopfung und/oder Verschmutzung der Fluxerdüse geschlossen werden, wobei aus der Größe der auf der Prüffläche abgebildeten Form des Sprühstrahls auf die Menge des durch die Fluxerdüse ausgebrachten Flussmittels geschlossen werden kann.

Vorteilhafterweise ist das Papier der Papierbahn dabei derart ausgebildet, dass die Abbildung der Form und/oder Position des Sprühstrahls auf der Oberseite der Papierbahn durch Benetzung der Papierbahn durch den Sprühstrahl von der Unterseite erfolgt, indem ein Farbkontrast zwischen benetzten Bereichen der Papierbahn und unbenetzten Bereichen der Papierbahn erzeugt wird. Vorteilhafterweise wird ein Papier verwendet, welches nicht zu hell, andererseits jedoch auch nicht zu dunkel ist. Entsprechend wird auch eine Saugfähigkeit und eine Dicke des Papiers gewählt. Besonders bevorzugt ist es dabei, wenn das Papier Thermopapier und/oder blaues Papier ist. Die Verwendung von blauem Papier hat sich zur Erzeugung eines ausreichenden Farbkontrasts als vorteilhaft erwiesen, wenn der Sprühstrahl im Wesentlichen Wasser umfasst. Die Verwendung von Thermopapier hat sich als vorteilhaft erwiesen, wenn der Sprühstrahl Alkohol umfasst.

Besonders bevorzugt ist es dabei, wenn eine Wickeleinrichtung vorgesehen ist, welche eine erste Walze und eine zweite Walze umfasst, zwischen denen die Papierbahn aufgespannt ist. Dabei ist es denkbar, dass die Papierbahn von der ersten Walze auf die zweite Walze abgewickelt wird oder umgekehrt.

Vorteilhafterweise ist eine Einrichtung vorgesehen, die zur Änderung eines Abstands der beiden vorzugsweise parallel zueinander angeordneten Walzen ausgebildet ist, so dass eine Spannung der Papierbahn eingestellt werden kann. Dabei ist es denkbar, dass die Einrichtung zur manuellen oder automatisierten Abstandsänderung der beiden Walzen ausgebildet ist.

Um ein möglichst einfaches Abwickeln der Papierbahn zu ermöglichen, hat es sich als vorteilhaft erwiesen, wenn ein Elektromotor vorgesehen ist, der zum Antreiben wenigstens einer der Walzen ausgebildet ist. Unter Antreiben wird dabei eine Rotation der Walzen um ihre Mittellängsachse verstanden. Vorteilhafterweise ist der Elektromotor mit einer zentralen Steuereinrichtung verbunden, wobei die Steuereinrichtung den Elektromotor derart ansteuert, dass eine Spannung der Papierbahn mittels des Elektromotors einstellbar ist.

Gemäß Anspruch 2 ist vorgesehen, dass die Prüffläche eine transparente Platte, insbesondere eine Glasplatte ist. Mit einer derartigen Glasplatte ist es möglich, eine stehende Welle, insbesondere eine stehende Welle einer Lötdüse zum selektiven Wellenlöten mit der Unterseite der transparenten Platte in Kontakt zu bringen, so dass die Form und/oder Position der stehenden Welle auf der Oberseite der transparenten Platte abgebildet wird. Somit kann bspw. auch eine Verschmutzung einer Lötdüse detektiert werden. Es ist jedoch auch möglich, zu erkennen, ob eine Lötdüse mit der für die Lötdüse vorgesehenen Pumpenleistung versorgt wird.

Bei der Überwachung des Zustands einer stehenden Lotwelle ist im Randbereich der transparenten Platte eine Beleuchtungseinrichtung vorgesehen, welche die transparente Platte von der Unterseite beleuchtet. Somit können bei der Überwachung des Zustands einer stehenden Lotwelle durch das reflektierende Lot und die Beleuchtungseinrichtung Umrisse der Lotwelle (sogenannte Corona) sichtbar gemacht werden, da in Randbereichen, in denen die Lotwelle die transparente Platte berührt, Reflexionen entstehen, welche mit der Kamera detektiert werden können.

Um eine automatisierte Zustandsüberwachung des Sprühstrahls und/oder der stehenden Welle ermöglichen zu können, hat es sich als vorteilhaft erwiesen, wenn die Vorrichtung eine Steuereinrichtung aufweist, die zum Speichern einer Soll-Form und/oder einer Soll-Position des Sprühstrahls und/oder zum Speichern einer Soll-Form und/oder einer Soll-Position der stehenden Welle ausgebildet ist, wobei die Steuereinrichtung zum Vergleichen der Soll-Form und/oder Soll-Position mit der detektierten Form und/oder Position des Sprühstrahls und/oder der stehenden Welle ausgebildet ist.

Die eingangs genannte Aufgabe wird darüber hinaus durch ein Verfahren mit den Merkmalen des Anspruchs 8 gelöst. Ein derartiges Verfahren umfasst insbesondere die folgenden Schritte: In Kontakt bringen des Sprühstrahls und/oder der stehenden Welle mit einer Unterseite einer Prüffläche, so dass eine Form und/oder Position des Sprühstrahls und/oder eine Form und/oder Position der stehenden Welle auf einer Oberseite der Prüffläche abgebildet wird; Detektieren der auf der Oberseite der Prüffläche abgebildeten Form und/oder Position des Sprühstrahls und/oder der auf der Prüffläche abgebildeten Form und/oder Position der stehenden Welle mittels einer Kamera. Vorteilhafterweise erfolgt die Detektion der Form und/oder Position des Sprühstrahls bzw. der stehenden Welle mittels einer Digitalkamera. Dabei ist es denkbar, dass die von der Kamera detektierte Form und/oder Position des Sprühstrahls bzw. der stehenden Welle mittels Bildverarbeitung in einer Steuereinrichtung, bspw. in einer Steuereinrichtung einer Lötanlage zum selektiven Wellenlöten, weiterverarbeitet wird. Vorteilhafterweise wird die Lötdüse in einem Abstand zur Prüffläche positioniert, welcher einer gewünschten Höhe der stehenden Welle entspricht. Aufgrund der auf der Prüffläche abgebildeten Form und/oder Position kann daher auch, bspw. mittels digitaler Bildbearbeitung, auf eine Höhe der stehenden Welle geschlossen werden.

Besonders bevorzugt ist es dabei, wenn die detektierte Form und/oder Position des Sprühstrahls und/oder die detektierte Form und/oder Position der stehenden Welle mit einer Soll-Form und/oder einer Soll-Position des Sprühstrahls und/oder der stehenden Welle verglichen wird. Vorteilhafterweise wird die Soll-Form und/oder Soll-Position zuvor in einer Steuereinrichtung abgespeichert.

Gemäß einer ersten Alternative des Verfahren ist vorgesehen, dass als Prüffläche eine aufgespannte Papierbahn verwendet wird, wobei die Abbildung der Form und/oder Position des Sprühstrahls auf der Oberseite der Papierbahn durch Benetzung der Papierbahn durch den Sprühstrahl von der Unterseite erfolgt, indem ein Farbkontrast zwischen benetzten Bereichen der Papierbahn und unbenetzten Bereichen der Papierbahn erzeugt wird.

Vorteilhafterweise wird die Fluxerdüse und/oder die Lötdüse für die Überwachung des Zustands der Fluxerdüse und/oder der Lötdüse von einer Arbeitsposition in eine Prüfposition verfahren. Somit kann eine Vorrichtung zur Überwachung des Sprühstrahls und/oder der stehenden Welle in einer Lötanlage zum selektiven Wellenlöten außerhalb eines Arbeitsbereichs montiert bzw. angeordnet werden, wobei die Fluxerdüse bzw. Lötdüse lediglich für die Zustandsüberwachung bzw. Überprüfung von der Arbeitsposition in die Prüfposition verfahren werden muss.

Weitere Einzelheiten und vorteilhafte Weiterbildungen sind der nachfolgenden Beschreibung zu entnehmen, anhand derer zwei Ausführungsformen der Erfindung näher beschrieben und erläutert sind.

Es zeigen:
- Figur 1: eine schematische Seitenansicht einer ersten Ausführungsform einer erfindungsgemäßen Vorrichtung zur Überwachung eines Zustands eines Sprühstrahls; und
- Figur 2: eine schematische Seitenansicht einer zweiten Ausführungsform einer erfindungsgemäßen Vorrichtung zur Überwachung eines Zustands einer stehenden Welle.

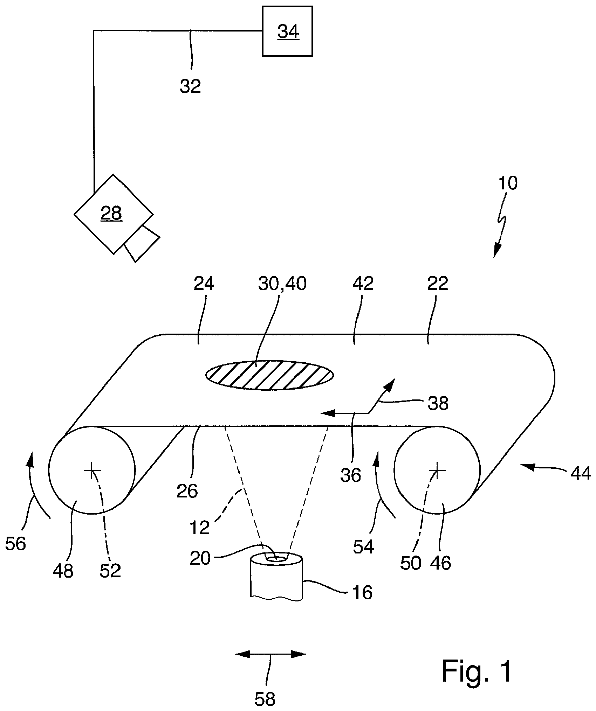

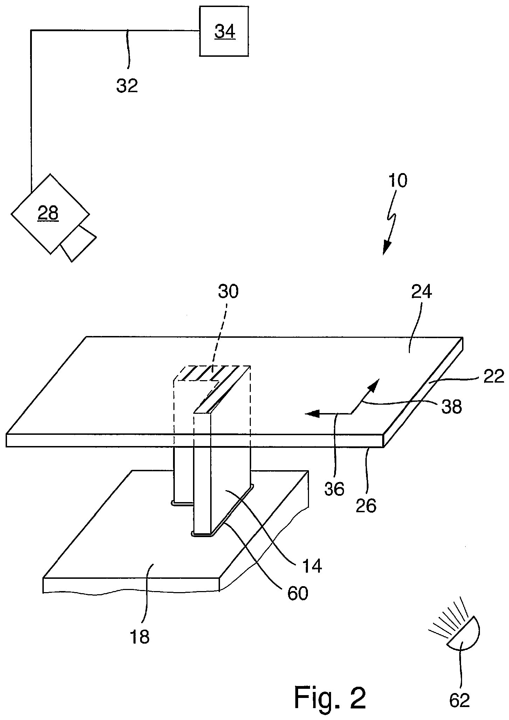

In den Figuren 1 und 2 sind zwei verschiedene

Ausführungsformen einer erfindungsgemäßen Vorrichtung 10 zur Überwachung eines Zustands eines Sprühstrahls 12 (vgl. Figur 1) und/oder einer stehenden Welle 14 (vgl. Figur 2) gezeigt.

Sich in den Figuren entsprechende Elemente sind mit den sich entsprechenden Bezugszeichen gekennzeichnet.

Figur 1 zeigt eine schematische Seitenansicht einer ersten Ausführungsform der Vorrichtung 10, die zur Überwachung eines Sprühstrahls 12 einer Fluxerdüse 16 ausgebildet ist. Figur 2 zeigt eine schematische Seitenansicht einer zweiten Ausführungsform der Vorrichtung 10, die zur Überwachung einer stehenden Welle 14 einer Lötdüse 18 eines in den Figuren nicht gezeigten Löttiegels zum selektiven Wellenlöten ausgebildet ist.

Wie in Figur 1 deutlich zu erkennen ist, verlässt der Sprühstrahl 12 die Fluxerdüse 16 an einem Fluxerdüsenauslass 20 und fächert sich danach in seiner Breite auf. Die in Figur 1 gezeigte erste Ausführungsform der Vorrichtung 10 weist eine als aufgespannte Papierbahn ausgebildete Prüffläche 22 auf. Die Papierbahn 22 weist eine Oberseite 24 und eine Unterseite 26 auf.

Die Vorrichtung 10 ist insgesamt derart ausgebildet, dass eine Form und/oder Position des Sprühstrahls 12 auf der Oberseite 24 der Papierbahn 22 dadurch abbildbar ist, dass der Sprühstrahl 12 mit der Unterseite 26 der Papierbahn 22 in Kontakt gebracht wird. Die Vorrichtung 10 weist ferner eine oberhalb der Oberseite 24 der Papierbahn 22 angeordnete Digitalkamera 28 auf, die zur Detektion der auf der Oberseite 24 der Papierbahn 22 abgebildeten Form und/oder Position 30 des Sprühstrahls 12 ausgebildet ist. Dabei ist es denkbar, dass die von der Digitalkamera 28 detektierte Form und/oder Position 30 des Sprühstrahls 12 mittels Bildverarbeitung in einer mit der Digitalkamera 28 durch eine Signalleitung 32 verbundenen Steuereinrichtung 34, bspw. in einer Steuereinrichtung einer Lötanlage zum selektiven Wellenlöten, weiterverarbeitet wird und an einen Bediener der Lötanlage eine Information über den Zustand des Sprühstrahls 12 ausgegeben wird. Eine Position des Sprühstrahls 12 kann dabei in Richtung einer X-Achse 36 und in Richtung einer Y-Achse 38 detektiert werden.

Das Papier der Papierbahn 22 ist derart ausgebildet, dass die Abbildung der Form und/oder Position 30 des Sprühstrahls 12 auf der Oberseite 24 der Papierbahn 22 durch Benetzung der Papierbahn 22 durch den Sprühstrahl 12 von der Unterseite 26 erfolgt, indem ein Farbkontrast zwischen benetzten Bereichen 40 der Papierbahn 22 und unbenetzten Bereichen 42 der Papierbahn 22 erzeugt wird. Vorteilhafterweise wird ein Papier verwendet, welches nicht zu hell, andererseits jedoch auch nicht zu dunkel ist. Entsprechend wird auch eine Saugfähigkeit und eine Dicke des Papiers gewählt. Vorteilhafterweise wird blaues Papier und/oder Thermopapier verwendet. Die Verwendung von blauem Papier hat sich zur Erzeugung eines ausreichenden Farbkontrasts als vorteilhaft erwiesen, wenn der Sprühstrahl im Wesentlichen Wasser umfasst. Die Verwendung von Thermopapier hat sich als vorteilhaft erwiesen, wenn der Sprühstrahl Alkohol umfasst.

Die in Figur 1 gezeigte Vorrichtung 10 weist eine Wickeleinrichtung 44 auf, die eine erste Walze 46 und eine zweite Walze 48 umfasst, zwischen denen die Papierbahn 22 aufgespannt ist, so dass die Papierbahn 22 bzw. die Prüffläche 22 eben ist und insbesondere in einer Ebene orthogonal zur Richtung des Sprühstrahls 12 bzw. zu einer Mittelachse der Fluxerdüse 16 angeordnet ist.

Zum Antreiben wenigstens einer der Walzen 46, 48 ist ein in den Figuren nicht gezeigter Elektromotor vorgesehen, der zum Antreiben wenigstens einer der Walzen 46, 48 ausgebildet ist. Unter Antreiben wird dabei eine Rotation der Walzen 46, 48 um ihre jeweilige Mittellängsachse 50, 52 in Richtung der Pfeile 54, 56 verstanden. Der Elektromotor ist mit der Steuereinrichtung 34 verbunden, wobei die Steuereinrichtung 34 den Elektromotor derart ansteuert, dass eine Spannung der Papierbahn 22 mittels des Elektromotors einstellbar ist.

Dabei ist es denkbar, dass die Papierbahn 22 von der ersten Walze 44 auf die zweite Walze 46 abgewickelt wird oder umgekehrt. Es ist auch möglich, dass eine in den Figuren nicht gezeigte Einrichtung vorgesehen ist, die zur Änderung eines Abstands der beiden vorzugsweise parallel zueinander angeordneten Walzen in Richtung des in Figur 1 gezeigten Doppelpfeils 58 ausgebildet ist, so dass eine Spannung der Papierbahn 22 eingestellt werden kann. Dabei ist es denkbar, dass die Einrichtung zur manuellen oder automatisierten Abstandsänderung der beiden Walzen 46, 48 ausgebildet ist.

Die Steuereinrichtung 34 ist zum Speichern einer Soll-Form und/oder einer Soll-Position des Sprühstrahls 12 ausgebildet. Darüber hinaus ist die Steuereinrichtung 34 zum Vergleichen der Soll-Form und/oder Soll-Position mit der detektierten Form und/oder Position 30 des Sprühstrahls 12 ausgebildet. Somit kann bei Abweichung der detektierten Form und/oder Position von der Soll-Form und/oder Soll-Position eine Ausgabe einer entsprechenden Information an einen Bediener der Vorrichtung 10 erfolgen.

Nach Abschluss der Überwachung des Sprühstrahls 12 kann die Fluxerdüse 16 wieder von einer Prüfposition in eine Arbeitsposition verfahren werden, wobei dann die Papierbahn 22 mittels der Walzen 46, 48 weiter gewickelt wird, so dass zwischen den Walzen 46, 48 lediglich unbenetzte Bereiche 42 der Papierbahn 22 vorhanden sind, wobei die benetzten Bereiche 40 aus einem Sichtfeld der Digitalkamera 28 verschwinden.

Bei der in Figur 2 gezeigten zweiten Ausführungsform der Vorrichtung 10 sind sich entsprechende Elemente mit den sich entsprechenden Bezugszeichen gekennzeichnet. Bei der Ausführungsform der Figur 2 ist die Prüffläche 22 als ebene transparente Platte, insbesondere als ebene Glasplatte ausgebildet. Die Glasplatte 22 weist wiederum eine Oberseite 24 und eine Unterseite 26 auf.

Die in Figur 2 gezeigte Vorrichtung 10 ist derart ausgebildet, dass eine Form und/oder Position 30 der stehenden Welle 14, die an einem Düsenauslass 60 aus der Lötdüse 18 austritt, auf der Oberseite 24 der Glasplatte 22 dadurch abbildbar ist, dass die stehende Welle 14 mit der Unterseite 26 der Glasplatte 22 in Kontakt gebracht wird. Die Vorrichtung 10 weist ebenfalls eine oberhalb der Oberseite 24 der Glasplatte 22 angeordnete Digitalkamera 28 auf, die zur Detektion der auf der Oberseite der Glasplatte 22 abgebildeten Form und/oder Position 30 der stehenden Welle 16 ausgebildet ist. Ferner weist die Vorrichtung 10 im Randbereich der Glasplatte 22 eine als Leuchte ausgebildete Beleuchtungseinrichtung 62 auf, welche die Glasplatte 22 von der Unterseite 26 beleuchtet. Somit können bei der Überwachung des Zustands einer stehenden Lotwelle 14 durch das reflektierende Lot der Lotwelle 14 und die Beleuchtungseinrichtung 62 Umrisse der Lotwelle 14 (sogenannte Corona) sichtbar gemacht werden.

Die von der Digitalkamera 28 detektierte Form und/oder Position 30 der stehenden Welle 14 kann mittels Bildverarbeitung in einer mit der Digitalkamera 28 durch eine Signalleitung 32 verbundenen Steuereinrichtung 34, bspw. in einer Steuereinrichtung einer Lötanlage zum selektiven Wellenlöten, weiterverarbeitet werden. An einen Bediener der Lötanlage kann dann eine Information über den Zustand des der stehenden Welle 14 ausgegeben werden. Eine Position der stehenden Welle 14 kann ebenfalls in Richtung einer X-Achse 36 und in Richtung einer Y-Achse 38 detektiert werden.

Die Steuereinrichtung 34 ist zum Speichern einer Soll-Form und/oder einer Soll-Position der stehenden Welle 14 ausgebildet. Darüber hinaus ist die Steuereinrichtung 34 zum Vergleichen der Soll-Form und/oder Soll-Position mit der detektierten Form und/oder Position 30 der stehenden Welle 14 ausgebildet. Somit kann bei Abweichung der detektierten Form und/oder Position 30 von der Soll-Form und/oder Soll-Position eine Ausgabe einer entsprechenden Information an einen Bediener der Vorrichtung 10 erfolgen.

Somit kann bspw. auch eine Verschmutzung oder Entnetzung einer Lötdüse 18 detektiert werden. Es ist jedoch auch möglich, zu erkennen, ob eine Lötdüse 18 mit der für die Lötdüse 18 vorgesehenen Pumpenleistung versorgt wird und somit die vorgegebene Höhe der stehenden Welle (14) erreicht wird.

## Patentansprüche

1. Lötanlage zum Wellenlöten mit wenigstens einer Fluxerdüse (16) und einer Vorrichtung (10) zur Überwachung eines Zustands eines Sprühstrahls (12) der Fluxerdüse (16), **dadurch gekennzeichnet, dass** die Vorrichtung (10) zur Überwachung des Zustands des Sprühstrahls (12) eine Prüffläche (22) in Form einer aufgespannten Papierbahn (22) aufweist, die eine Oberseite (24) und eine Unterseite (26) aufweist und derart eingerichtet ist, dass eine Form und/oder Position (30) des Sprühstrahls (12) auf der Oberseite (24) der aufgespannten Papierbahn (22) dadurch abbildbar ist, dass der Sprühstrahl (12) mit der Unterseite (24) der aufgespannten Papierbahn (22) in Kontakt gebracht wird, und
dass eine Kamera (28) vorgesehen ist, die oberhalb der Oberseite (24) der aufgespannten Papierbahn (22) angeordnet ist und die zur Detektion der auf der Oberseite (24) der aufgespannten Papierbahn (22) abgebildeten Form und/oder Position (30) des Sprühstrahls (12) ausgebildet ist.

2. Lötanlage zum Wellenlöten mit wenigstens einen Löttiegel mit wenigstens einer Lötdüse (18) und einer Vorrichtung (10) zur Überwachung eines Zustands einer stehenden Welle (14) der Lötdüse (18), wobei die Vorrichtung (10) zur Überwachung des Zustands der stehenden Welle (14) eine Prüffläche (22) in Form einer transparenten Platte aufweist, die eine Oberseite (24) und eine Unterseite (26) aufweist und derart eingerichtet ausgebildet ist, dass eine Form und/oder Position (30) der stehenden Welle (14) auf der Oberseite (24) der Platte (22) dadurch abbildbar ist, wobei die stehende Welle (14) mit der Unterseite (24) der Platte (22) in Kontakt gebracht wird, und mit einer Kamera (28), die oberhalb der Oberseite (24) der Prüffläche (22) angeordnet ist und die zur Detektion der auf der Oberseite (24) der Prüffläche (22) abgebildeten Form und/oder Position (30) der stehenden Welle (14) ausgebildet ist, **dadurch gekennzeichnet, dass** in einem Randbereich der transparenten Platte (22) eine Beleuchtungseinrichtung (62) vorgesehen ist, welche die transparente Platte (22) von der Unterseite beleuchtet.

3. Lötanlage nach Anspruch 1 oder 2, wobei die Prüffläche (22) eben ausgebildet ist.

4. Lötanlage nach Anspruch 1, wobei das Papier der Papierbahn (22) derart ausgebildet ist, dass die Abbildung der Form und/oder Position (30) des Sprühstrahls (12) auf der Oberseite (24) der Papierbahn (22) durch Benetzung der Papierbahn (22) durch den Sprühstrahl (12) von der Unterseite (26) erfolgt, indem ein Farbkontrast zwischen benetzten Bereichen (40) der Papierbahn (22) und unbenetzten Bereichen (42) der Papierbahn (22) erzeugt wird.

5. Lötanlage nach Anspruch 4, wobei eine Wickeleinrichtung (44) vorgesehen ist, welche eine erste Walze (46) und eine zweite Walze (48) umfasst, zwischen denen die Papierbahn (22) aufgespannt ist.

6. Lötanlage nach Anspruch 5, wobei ein Elektromotor vorgesehen ist, der zum Antreiben wenigstens einer der Walzen (46, 48) ausgebildet ist.

7. Lötanlage nach einem der vorherigen Ansprüche, wobei die Vorrichtung eine Steuereinrichtung (34) aufweist, die zum Speichern einer Soll-Form und/oder einer Soll-Position des Sprühstrahls (12) und/oder zum Speichern einer Soll-Form und/oder einer Soll-Position der stehenden Welle (14) ausgebildet ist, wobei die Steuereinrichtung (34) zum Vergleichen der Soll-Form und/oder Soll-Position mit der detektierten Form und/oder Position (30) des Sprühstrahls (12) und/oder der stehenden Welle (14) ausgebildet ist.

8. Verfahren zur Überwachung eines Zustands eines Sprühstrahls (12) einer Fluxerdüse (16) oder zur Überwachung eines Zustands einer stehenden Welle (14) einer Lötdüse (18) zum selektiven Wellenlöten, umfassend die folgenden Schritte:
- In Kontakt bringen
o des Sprühstrahls (12) mit einer Unterseite (26) einer Prüffläche (22) in Form einer aufgespannten Papierbahn, so dass eine Form und/oder Position (30) des Sprühstrahls (12) auf einer Oberseite (24) der Papierbahn (22) abgebildet wird; oder
o der stehenden Welle (14) mit einer Unterseite (26) einer Prüffläche (22) in Form einer transparenten Platte und beleuchten der Prüffläche (22) von der Unterseite, so dass eine Form und/oder Position (30) der stehenden Welle (14) auf einer Oberseite (24) der Platte (22) abgebildet wird;
- und Detektieren der auf der Oberseite (24) der Prüffläche (22) abgebildeten Form und/oder Position (30) des Sprühstrahls (12) oder der stehenden Welle (14) mittels einer Kamera (28).

9. Verfahren nach Anspruch 8, wobei die detektierte Form und/oder Position (30) des Sprühstrahls (12) und/oder die detektierte Form und/oder Position (30) der stehenden Welle (14) mit einer Soll-Form und/oder einer Soll-Position des Sprühstrahls (12) oder der stehenden Welle (14) verglichen wird.

10. Verfahren nach Anspruch 8 oder 9, wobei die Abbildung der Form und/oder Position (30) des Sprühstrahls (12) auf der Oberseite (24) der Papierbahn (22) durch Benetzung der Papierbahn (22) durch den Sprühstrahl (12) von der Unterseite (26) erfolgt, indem ein Farbkontrast zwischen benetzten Bereichen (40) der Papierbahn (22) und unbenetzten Bereichen (42) der Papierbahn (22) erzeugt wird.

11. Verfahren nach wenigstens einem der Ansprüche 8 bis 10, wobei die Fluxerdüse (16) oder die Lötdüse (18) für die Überwachung des Zustands des Sprühstrahls (12) der Fluxerdüse (16) oder der Lotwelle (14) der Lötdüse (18) von einer Arbeitsposition in eine Prüfposition verfahren wird.

12. Verfahren nach einem der Ansprüche 8 bis 11 zum Betreiben einer Vorrichtung (10) nach wenigstens einem der Ansprüche 1 bis 7.

## Claims

1. Soldering system for wave soldering comprising at least one fluxer nozzle (16) and a device (10) for monitoring a state of a spray jet (12) of the fluxer nozzle (16),
**characterized in that** the device (10) for monitoring the state of the spray jet (12) comprises a test surface (22) in the form of a tensioned paper web (22), which comprises an upper side (24) and a lower side (26) and is set up in such a manner that a shape and/or position (30) of the spray jet (12) can be imaged on the upper side (24) of the tensioned paper web (22) by bringing the spray jet (12) into contact with the lower side (24) of the tensioned paper web (22), and
**in that** a camera (28) is provided which is arranged above the upper side (24) of the tensioned paper web (22) and which is configured for detecting the shape and/or position (30) of the spray jet (12) imaged on the upper side (24) of the tensioned paper web (22).

2. Soldering system for wave soldering comprising at least one soldering pot having at least one soldering nozzle (18) and an device (10) for monitoring a state of a standing wave (14) of the soldering nozzle (18), wherein the device (10) for monitoring the state of the standing wave (14) comprises an test surface (22) in the form of a transparent plate which comprises an upper side (24) and a lower side (26) and is configured such that a shape and/or position (30) of the standing wave (14) on the upper side (24) of the plate (22) can be imaged thereby, wherein the standing wave (14) is brought into contact with the lower side (26) of the plate (22), and with a camera (28) which is arranged above the upper side (24) of the test surface (22) and which is configured to detect the shape and/or position (30) of the standing wave (14) imaged on the upper side (24) of the test surface (22) **characterized in that** an illumination device (62) is provided in an edge region of the transparent plate (22), which illuminates the transparent plate (22) from the lower side.

3. Soldering system according to claim 1 or 2, wherein the test surface (22) is flat.

4. Soldering system according to claim 1, wherein the paper of the paper web (22) is designed in such a way that the imaging of the shape and/or position (30) of the spray jet (12) on the upper side (24) of the paper web (22) is effected by wetting of the paper web (22) by the spray jet (12) from the lower side (26) by creating a color contrast between wetted regions (40) of the paper web (22) and unwetted regions (42) of the paper web (22).

5. Soldering system according to claim 4, wherein a winding device (44) is provided, which comprises a first roll (46) and a second roll (48), between which the paper web (22) is tensioned.

6. Soldering system according to claim 5, wherein an electric motor is provided which is configured to drive at least one of the rolls (46, 48).

7. Soldering system according to any one of the preceding claims, wherein the device comprises a control apparatus (34) configured to store a desired shape and/or a desired position of the spray jet (12) and/or to store a desired shape and/or a desired position of the standing wave (14), wherein the control apparatus (34) is configured to compare the desired shape and/or desired position with the detected shape and/or position (30) of the spray jet (12) and/or the standing wave (14).

8. Method for monitoring a state of a spray jet (12) of a fluxer nozzle (16) or for monitoring a state of a standing wave (14) of a soldering nozzle (18) for selective wave soldering, comprising the following steps:
- Bringing into contact
- the spray jet (12) with an lower side (26) of a test surface (22) in the form of a tensioned paper web so that a shape and/or position (30) of the spray jet (12) is imaged on an upper surface (24) of the paper web (22); or
- the standing wave (14) having a lower side (26) of a test surface (22) in the form of a transparent plate and illuminating the test surface (22) from the lower side so that a shape and/or position (30) of the standing wave (14) is imaged on an upper side (24) of the plate (22);
- and detecting the shape and/or position (30) of the spray jet (12) or the standing wave (14) imaged on the upper side (24) of the test surface (22) by means of a camera (28).

9. Method according to claim 8, wherein the detected shape and/or position (30) of the spray jet (12) and/or the detected shape and/or position (30) of the standing wave (14) is compared with a desired shape and/or a desired position of the spray jet (12) or the standing wave (14).

10. Method according to claim 8 or 9, wherein the imaging of the shape and/or position (30) of the spray jet (12) on the upper side (24) of the paper web (22) is performed by wetting the paper web (22) by the spray jet (12) from the lower side (26) by generating a color contrast between wetted areas (40) of the paper web (22) and unwetted areas (42) of the paper web (22).

11. Method according to at least one of claims 8 to 10, wherein the fluxer nozzle (16) or the soldering nozzle (18) is moved from a working position to a test position for monitoring the state of the spray jet (12) of the fluxer nozzle (16) or the soldering wave (14) of the soldering nozzle (18).

12. Method according to any one of claims 8 to 11 for operating a device (10) according to at least one of claims 1 to 7.

## Revendications

1. Installation de brasage pour le brasage à la vague avec au moins une buse de fluxeur (16) et un dispositif (10) pour la surveillance d'un état d'un jet de pulvérisation (12) de la buse de fluxeur (16), **caractérisée en ce que** le dispositif (10) présente pour la surveillance de l'état du jet de pulvérisation (12) une surface de contrôle (22) sous forme d'une bande de papier (22) tendue, qui présente une face supérieure (24) et une face inférieure (26) et est conçue de telle sorte qu'une forme et/ou position (30) du jet de pulvérisation (12) peut être reproduite sur la face supérieure (24) de la bande de papier (22) tendue, du fait que le jet de pulvérisation (12) est amené en contact avec la face inférieure (24) de la bande de papier (22) tendue, et
qu'une caméra (28) est prévue, qui est disposée au-dessus de la face supérieure (24) de la bande de papier (22) tendue et qui est réalisée pour la détection de la forme et/ou position (30) du jet de pulvérisation (12) reproduite sur la face supérieure (24) de la bande de papier (22) tendue.

2. Installation de brasage pour le brasage à la vague avec au moins un creuset de brasage avec au moins une buse de brasage (18) et un dispositif (10) pour la surveillance d'un état d'une vague stationnaire (14) de la buse de brasage (18), dans laquelle le dispositif (10) présente pour la surveillance de l'état de la vague stationnaire (14) une surface de contrôle (22) sous forme d'une plaque transparente, qui présente une face supérieure (24) et une face inférieure (26) et est réalisée de manière conçue de telle sorte qu'une forme et/ou position (30) de la vague stationnaire (14) peut être reproduite de cette manière sur la face supérieure (24) de la plaque (22), dans laquelle la vague stationnaire (14) est amenée en contact avec la face inférieure (26) de la plaque (22), et avec une caméra (28), qui est disposée au-dessus de la face supérieure (24) de la surface de contrôle (22) et qui est réalisée pour la détection de la forme et/ou position (30) de la vague stationnaire (14) reproduite sur la face supérieure (24) de la surface de contrôle (22), **caractérisée en ce qu'**un dispositif d'éclairage (62), lequel éclaire la plaque transparente (22) depuis la face inférieure, est prévu dans une zone de bord de la plaque transparente (22).

3. Installation de brasage selon la revendication 1 ou 2, dans laquelle la surface de contrôle (22) est réalisée de manière plate.

4. Installation de brasage selon la revendication 1, dans laquelle le papier de la bande de papier (22) est réalisé de telle sorte que la reproduction de la forme et/ou position (30) du jet de pulvérisation (12) sur la face supérieure (24) de la bande de papier (22) s'effectue par mouillage de la bande de papier (22) par le jet de pulvérisation (12) depuis la face inférieure (26), du fait qu'un contraste des couleurs entre les zones mouillées (40) de la bande de papier (22) et les zones non mouillées (42) de la bande de papier (22) est produit.

5. Installation de brasage selon la revendication 4, dans laquelle un dispositif d'enroulement (44) est prévu, lequel comprend un premier rouleau (46) et un deuxième rouleau (48), entre lesquels la bande de papier (22) est tendue.

6. Installation de brasage selon la revendication 5, dans laquelle un moteur électrique est prévu, qui est réalisé pour l'entraînement d'au moins un des rouleaux (46, 48).

7. Installation de brasage selon l'une quelconque des revendications précédentes, dans laquelle le dispositif présente un système de commande (34), qui est réalisé pour la mise en mémoire d'une forme de consigne et/ou d'une position de consigne du jet de pulvérisation (12) et/ou pour la mise en mémoire d'une forme de consigne et/ou d'une position de consigne de la vague stationnaire (14), dans laquelle le système de commande (34) est réalisé pour la comparaison de la forme de consigne et/ou position de consigne à la forme et/ou position (30) détectée du jet de pulvérisation (12) et/ou de la vague stationnaire (14).

8. Procédé pour la surveillance d'un état d'un jet de pulvérisation (12) d'une buse de fluxeur (16) ou pour la surveillance d'un état d'une vague stationnaire (14) d'une buse de brasage (18) pour le brasage à la vague sélectif, comprenant les étapes suivantes :
- l'amenée en contact
o du jet de pulvérisation (12) avec une face inférieure (26) d'une surface de contrôle (22) sous forme d'une bande de papier tendue, de sorte qu'une forme et/ou position (30) du jet de pulvérisation (12) est reproduite sur une face supérieure (24) de la bande de papier (22) ; ou
o de la vague stationnaire (14) avec une face inférieure (26) d'une surface de contrôle (22) sous forme d'une plaque transparente et éclairage de la surface de contrôle (22) depuis la face inférieure, de sorte qu'une forme et/ou position (30) de la vague stationnaire (14) est reproduite sur une face supérieure (24) de la plaque (22) ;
- et la détection de la forme et/ou position (30) du jet de pulvérisation (12) ou de la vague stationnaire (14) reproduite sur la face supérieure (24) de la surface de contrôle (22) au moyen d'une caméra (28).

9. Procédé selon la revendication 8, dans lequel la forme et/ou position (30) détectée du jet de pulvérisation (12) et/ou la forme et/ou position (30) détectée de la vague stationnaire (14) est comparée à une forme de consigne et/ou une position de consigne du jet de pulvérisation (12) ou de la vague stationnaire (14).

10. Procédé selon la revendication 8 ou 9, dans lequel la reproduction de la forme et/ou position (30) du jet de pulvérisation (12) sur la face supérieure (24) de la bande de papier (22) s'effectue par mouillage de la bande de papier (22) par le jet de pulvérisation (12) depuis la face inférieure (26), du fait qu'un contraste des couleurs est produit entre les zones mouillées (40) de la bande de papier (22) et les zones non mouillées (42) de la bande de papier (22) .

11. Procédé selon au moins l'une des revendications 8 à 10, dans lequel la buse de fluxeur (16) ou la buse de brasage (18) est déplacée pour la surveillance de l'état du jet de pulvérisation (12) de la buse de fluxeur (16) ou de la vague de brasage (14) de la buse de brasage (18) à partir d'une position de travail dans une position de contrôle.

12. Procédé selon l'une quelconque des revendications 8 à 11 pour le fonctionnement d'un dispositif (10) selon au moins l'une des revendications 1 à 7.
